# EUROPEAN PATENT APPLICATION

(11) **EP 4 790 587 A1**
(43) Date of publication of application: **12.08.2026**
(21) Application number: 25156989.3
(22) Date of filing: 11.02.2025
(51) Int. Cl.: G06F 40/30, G06N 3/045, G06N 3/08

(54) **COMPUTER-IMPLEMENTED METHOD FOR ASSISTING A PROMPT GENERATING AGENT IN GENERATING PROMPTS FOR A GENERATIVE AI SYSTEM**

(71) Applicant: von Reventlow, Christian, 81247 Munich (DE)
(72) Inventor: von Reventlow, Christian, 81247 Munich (DE)
(74) Representative: Kiwit, Benedikt

(57) **Abstract**

The invention relates to a computer-implemented method for assisting prompt generation for a generative AI system, comprising reading in at least one prompt from an input interface; analyzing the at least one prompt and evaluating the at least one prompt based on at least one of specificity, completeness, likelihood of the AI system to produce high quality output and contextual relevance; and based on the evaluation result execute at least one of the following:
- determine and provide information on the evaluation result to the user on the likelihood of achieving high-quality output
- determine and provide potential prompt modifications and
- establish communication between a prompt generating agent and an assisting agent for enabling the assisting agent to communicate with the prompt generating agent.

## Description

The invention regards a computer implemented method for assisting a prompt generating agent in generating prompts used as input in an AI system for generating output based on the prompts.

Recently, generative AI systems significantly improved regarding the ability to generate output from prompts that may be input by a prompt generating agent such as a user. However, all these systems still rely on a user input, namely the user created prompt. It is evident that these systems need to accurately interpret these user input prompts in order to generate contextually relevant and sufficiently concrete responses. One problem is that the systems have problems in capturing nuanced meanings and contextual subtleties of user inputs, as well as implicit user output expectations, resulting in irrelevant or unsatisfactory responses. Currently, users have to gain their own experience when creating a prompt for inputting relevant information to the AI system.

Users regularly need a number of attempts to improve their prompts or to provide additional information in the form of documents that specify the context for the respective query in sufficient detail. Such a procedure is time-consuming and inefficient. A user will only recognize that his prompt needs an improvement when the generated output produced by the AI system based on the prompt does not satisfy his expectations. The user will then try another prompt formulation or an enriched prompt in which more contextual information is included or which is a more precise formulation or description of the desired AI system output. Nevertheless, trial and error will only lead to the desired results by chance.

It is therefore a task of the present invention to improve the generation of prompts without the prompt generating agent having to improve the generation of the result to be output by its own knowledge and creative modification of the prompt.

The task is achieved by the proposed method for assisting prompt generation for a generative AI system.

According to the present invention, the computer-implemented method assists generation of prompts for a generative AI system by preparing an analysis of an input prompt based on input information provided by the prompt generating agent, which may be a user or an AI system. Based on such analysis, the system makes suggestions to modify the prompts created by the prompt generating agent, provide information which gives feedback or assists the prompt generating agent in amending the prompts taking into consideration the information provided by the proposed method or initiates a communication with a human expert and/or another agent that communicates with the assisted user. Amending includes at least one of modifying, replacing a rolling back to the state in previous prompts. The human expert and the another agent may also be referred to as assisting agent. Thus, the user is not on his own when it comes to a necessary modification of the prompt, which is input for being supplied to the generative AI system. The method may similarly be applied for assisting a human as prompt generating agent but also in case that a prompt is an AI generated prompt. In this case, for all explanations provided herein below, the "user" is mentioned as a representative for any prompt generating agent.

In a first step, the system reads in, from an input interface, at least one prompt which includes but is not limited to the received user input. The user input may be but is not limited to textual input, via an input interface for inputting at least one initial prompt. Textual input may be provided either directly by typing a written text or indirectly by inputting speech, which can be converted to written text using a respective speech to text conversion algorithm. Text may even be input by providing a text file or a visualization of text, for example an image of a printed text input may also comprise, additionally or alternatively, any other form of data enabling to define a user intention, context for a query, or user expectation on the output to be generated. Such data may be provided in the form of documents, multimedia files and other content such as websites or digital input via an API (application programming interface) with arbitrary specification of data fields from another computer system. In this disclosure the input interface may include a prompt window in which a user can directly input information, but also the above mentioned API that allows to receive information. An input interface in the sense of the present disclosure shall be any interface of the system which allows to input information in any form. Such input interface may therefore be a single interface like an API or the prompt window mentioned above but also a combination of a plurality of single interfaces of the same type or different types.

The prompt read in by the system via the input interface is then analyzed by the system in order to determine the intention of the user when creating the prompt. In case of textual input included in the prompt the analysis may include parsing the input text or input text might get tokenized, for example. Textual input may be included in a prompt in many different ways. Textual input may be received as input directly from the user who types text, but textual input may also result from a conversion of speech input by the user. Further, textual input may be included in documents supplementing or being the prompt. The documents are not limited to specific file types. Typical document types may be word files or pdf files. Obviously this in in no way limiting.

In a similar way, other input than textual input, for example pictures, image or images included in videos, or videos can be analyzed. Such analysis may be "low-level analysis", which may, for example, include identifying objects and relations between objects or different pictures or images. The analysis could also be performed as "higher level analysis", in which, for example the analysis is performed on a more abstract level providing information on a scene depicted in an image or picture without referring to specific objects. For example, the analysis may provide "bathroom" in addition or instead of "washbasin", "toilet", "bathtub",..., and the spatial arrangement. The analysis may even provide information on an entirely abstract level, for example "abstract image". In case of moving image (or a sequence of images), even the story of the moving image (sequence of images) may be extracted. The algorithms for analyzing for example images or sequences of images are known in the art and will be applied for the analysis of input information being part of the read in prompt as necessary.

Videos may already include tracks with sound, but it is also possible to read in sound files only including sound information without any images. It is to be noted that hereinafter the expression "image" will be used but any consideration for images is valid for pictures as well. The system can also determine other information from an image, a plurality of images, or a sequence of images (including a video). For example, an image style may be determined from the image or higher level information, for example, a scene (without directly referring to individual objects in the image), whether the image is realistic, a true representation of a real world scenario, an abstract visualization, fiction, a cartoon, ....

Based on the result of the analysis of the prompt(s), an evaluation on the analysis result is performed with respect to at least one of specificity, completeness, likelihood of the generative AI system to produce high quality output and contextual relevance. This evaluation of the analyzed prompt may be performed by a dedicated AI system, which is specialized in analyzing prompts. Based on the result of such evaluation, the method is then capable of providing assistance to the user, which may comprise at least one of:
- Determining and providing information on the evaluation result to the user on the likelihood of achieving high quality output. In this case, the system itself does not make a concrete proposal how to adjust the input information (prompt) but only provides information on deficiencies that can be identified from the user input or suggestions for supplementary information that could be provided when revising the prompt by the user. This information is then output to the user who can then, considering the information received, adjust the input information and, thus, the prompt. Such adjustment of information may comprise using an alternative wording, adding some context information, provide information on the user's expectation or the like. In any case, this adaptation of the input information fully lies in the responsibility of the user.
- Determining and providing potential prompt modifications. This second alternative, which may also be combined with the first alternative, makes direct proposals of prompt modifications to the user or another AI agent representing the user. For the following explanations it will only be referred to a user interacting with the system. However, all information provided herein is also valid for a situation in which an AI system generating prompts represents the user. Making proposals can be done by suggesting alternative wording or suggesting adding some information which can be directly or indirectly derived by the system. Indirectly deriving such information may, for example, include asking a user to provide information. The resulting prompt or prompt component is then provided to the user as a potential prompt modification, and the user may accept using such prompt modification for being input to the system. Accepting the prompt modification is typical for a case in which the system provides a complete prompt. However, the system may also provide proposals for prompt components as mentioned above, which can be taken over by the user and be expanded to complete prompts by the user.
- Alternatively, the system may establish a communication between the user and a human expert and/or another agent for assisting the user in revising his prompts or adding information. So in case that the system by itself reaches its limit with respect to suggestions it can make or information it can provide, external sources of information are used in order to provide further information or recommendations. It is to be noted that hereinafter, it will mainly be referred to a human expert as a source of information when communicating with the user. However, in the same way, another agent may be contacted instead or in addition to the human expert. The other agent may be a dedicated further AI system, for example, a large language model, which is specialized in generating or improving prompts to be provided to an AI system.

It is to be noted that for the explanations provided above it is assumed that the method steps are executed as individual sequential method steps. However, the analysis, evaluation and the following assistance (information provision, provision of prompt modifications and establishing communication) can be done by a neural network. In that case, no distinct method steps may be identified.

The proposed computer-implemented method has the advantage, that the user is no longer left alone when creating prompts in order to enable a generative AI system to generate output. The proposed system and method help a user to generate a prompt which is expected to lead to satisfactory output when supplied to the generative AI system. Without the inventive system, the user might have difficulties in understanding and identifying a problem with his initial input information leading to a non-satisfactory output. The analysis and evaluation of the user input allows to identify a lack of information, ambiguity in the formulation of the prompt, or other deficiencies for which the system can, based on knowledge the system has about prompts, predict that the resulting generated output will not be satisfactory.

Contrary to most known systems, the user does not have to await the output actually generated by the generative AI system based on a particular prompt supplied to the generative AI system, and then indirectly learn from the generated output that the prompt underlying generated output was insufficient or misleading. Rather, immediately upon the system read in all information commonly defining a prompt, the system will start an analysis of the received information included in the prompt and then an evaluation of the prompt in order to confirm sufficiency of the prompt or assist improving the prompt either by directly making proposals or at least by providing information allowing the user to improve his prompts or by establishing communication that the user may receive additional information on improvement of prompts by the human expert (or another agent). After generating an modified prompt by the user or accepting a proposed potential prompt improvement by the user, the generative AI system can then start generating output based on the improved prompt. The user can generate an amended prompt by taking over a proposal provided by the method in line with the explanations provided above, by creating a new prompt taking into consideration such provided proposal, or by trying a new approach. In any case, the method proceeds with reading in a new (amended) prompt. An "amended prompt" in the sense of the current explanations can be a substitute for the previous prompt, a prompt resulting from addition of an element to the previous prompt, deletion of an element from the previous prompt, reformulation of the previous prompt, or any combination thereof.

It is evident that the analysis and evaluation of the user input may be performed repeatedly in case that even the improved (or at least amended) prompt input is evaluated and it is determined that the prompt would still not to lead to satisfying results.

Preferably, the input analysis of the received prompt uses natural language processing for textual input components of the prompt. These textual components comprise directly input text from the user but also text obtained from a conversion of input speech (speech-to-text) into written text, or text included in documents inserted in the prompt window or loaded via a respective interface (API). The evaluation of input text may use a transformer-based neural network, pre-trained on general corpora and fine-tuned on domain-specific data and idiomatic expressions, enabling precise detection of ambiguous, incomplete, or idiomatic language.

It is to be noted that natural language processing is not limited to textual input only but is also capable of analyzing images or other multimedia input. Such natural language processing is independent from the generative AI system finally responsible for generating content based on the final version of at least one prompt supplied to the generative AI system for causing the system to generate its output. The natural language processing used to analyze the prompt is specialized in analyzing user input information. Natural language processing techniques may specifically be tokenization, part of speech tagging, named entity recognition, and semantic analysis. It is to be noted that this list is not limiting.

According to a preferred embodiment, the evaluation is then performed by a neural network model that is trained to identify idiomatic expressions and domain specific language within the input text.

According to a preferred implementation, determination of potential prompt improvements may comprise searching for potential prompt alternatives (including alternatives for only parts of a prompt, which is referred to as prompt segments) or prompt continuations in a prompt database. The prompt database stores information on prompts, which may include storing the prompts themselves. Typically, the information on prompts is stored as individual segments associated with additional information. This additional information can include rules for combining prompt segments to generate a complete prompt consisting of a plurality of such prompt segments. If an input prompt provided to the generative AI system resulted in satisfactory output in the past, such prompt (specific prompt segment combination) may be indicated as promising prompt in the prompt database and, based on an evaluation of a similarity with an actually input prompt (or its prompt segments commonly building the entire prompt), the prompt stored in the database may be suggested as potential prompt modification. Of course, such similarity evaluation is only provided as one example how alternative prompts can be derived from the prompt database as potential prompt modification. The prompt database search specifically includes utilizing embeddings and cosine similarity metrics to identify the best fitting continuations. Similar to the identification of a prompt that may be suggested as modification based on information associated with this prompt, e.g., an indication of satisfactory output generated based on this prompt, negative feedback information may also be stored in association with a prompt in the prompt database. This information may then be used to inform the user for example, that his prompt lacks sufficient detail, is ambiguous or the like. The information provided to the user may even including invitation to provide specific media content, for example a representation of an object based on which graphical output shall be generated by the generative AI system. The prompt database may store information usable for evaluation or generation of prompts in a variety of different ways. First, information used for prompts can be stored in the database in a plurality of information units, which only in combination generate a complete prompt. Further, this information does not need to be stored as text information but might also be any type of media content, or, more generally, any type of information or information representation which can be used by a user when inputting his initial information for generating a prompt.

It is particularly advantageous to continuously update the prompt database. The prompt database may even be a personalized database which means that for different users individual databases are provided and updated. Alternatively or additionally, it is also possible to provide common prompt databases. It is to be noted that the prompt database does not only store potential prompts (or prompt segments), prompt (segment) formulations and prompt continuations but also information on results (e.g. quality information on the result, confidence score,...) determined from output created by the generative AI system based on the prompt respective prompt or prompt segment to enable a correlation between the achieved results and the respective prompt used. Further, the prompt database may store general information on prompts, which is used in order to evaluate the analyzed received input. General information may be for example abstract requirements a proper prompt should fulfil. Such an abstract requirement could relate to certain information types a complete and proper prompt definition should have. Examples for such information types may be: target audience which the generated information is intended to be used for, required level of details, or definition of a field of interest. In the evaluation the system would then, based on the analysis of the received input, determine whether such information types are addressed in in the prompt input by the user. If not, this may be the basis for outputting information to the user motivating the user to add information for the respective information type to his prompt. New prompt continuations may be derived after successful interactions to enhance the relevance and diversity of suggestions. Such a new prompt or new prompt continuation is then added to a database if the created output is identified and marked by the user as satisfactory.

Generally, the prompt database might include quantitative quality metrics of the results created by the prompt or completeness metrics of the result created by the prompt. It is specifically advantageous to include not only positive feedback information associated with a prompt or prompt segment but also negative feedback information. Such negative feedback information is valuable to improve future assistance provided by the inventive method: repeatedly providing prompt segments, continuation or prompts that proved to be of low or now advantage for the user in previous situations can be avoided when negative feedback is stored in association with such prompt (segment). This association allows the method to identify a prompt (segment) which will presumably not be accepted by the user or is not promising for achieving improved output from the generative AI system. For example, feedback may be collected through explicit ratings or implicit behavioral signals, including response time and prompt iterations, and incorporated into a feedback loop to iteratively improve the neural network model through supervised learning techniques.

Advantageously, the evaluation of the at least one prompt after performing the analysis of the input uses a model or algorithm. After the user received information from the system based on the evaluation of the analyzed prompt, the user may provide feedback. The user feedback may then be used in order to update the model or algorithm. The system will learn from the feedback provided by the user on the assistance received. Such a feedback may also be simply amending a prompt in response to received information. This will be recognized by the system as a positive or negative feedback for the information provided.

According to a preferred embodiment, the prompt modifications suggested by the system may comprise prompt continuations, prompt sequence adjustment or both. A prompt modification may also include omitting a prompt from a prompt sequence or parts of a single prompt. According to the specific embodiment, the initial prompt read in based on user input is still used but an addition to the initial prompt is suggested by the system as prompt continuation. On the other hand, it is also possible that a sequence of information included in the input prompt or sequence of whole prompts is disadvantageous to the generation of output. This is recognized by the system and the system will thus propose an adjusted sequence. It is also possible that the system rolls back to a previous instance when it can be recognized from the latest amendments of the prompts that a different starting point would be more promising. This rollback is subsumed by the adaptation of the prompt sequence as well.

In case of a prompt sequence adjustment, it is preferred that the system applies the adjusted prompt sequence to a prior state of the output generation of the generative AI system. Using such a rollback function allows to revert to a previous (intermediate) output generated by the generative AI system and then proceed with the revised prompt sequence. It is not necessary to revert to the state of the first prompt in the revised prompt sequence but to the first differing prompt in the prompt sequence. This reduces the computational costs, because executing identical steps can be avoided.

In the analysis carried out on the user input, the system identifies a user's intent and context, and, based thereon, the model generates its proposed prompt modification. The evaluation takes into consideration information received from the prompt database which, as mentioned above, does not only store a plurality of wording proposals for prompts but also information on the structure of prompts, requirements or quality of existing prompts which may have resulted in satisfying responses in the past. The database may also hold reference prompts for which it could be determined in the past that these prompts are close to optimal. The evaluation can be made directly in response to reading in a prompt (after the analysis on the input is performed) and has a plurality of advantages. On the one side, the user directly receives a suggestion for amending the initial prompt and on the other hand, the suggestions may trigger the user to recognize whether the system in fact correctly interpreted his intent and the context in which and for which the initial prompt was created. An "amendment" in the context of the present disclosure may be any modification. even in case that the suggested prompt modification made by the system is not directly acceptable or advantageous for the generation of output by the generative AI system, this enables the user to identify that his initially input information (prompt) might have been misleading or at least ambiguous.

The system can learn that certain prompt suggestions (provided potential prompt modifications) are considered to be more advantageous by the user. Based on the reaction of the user on a prompt suggestion, for example, dismissal of the prompt suggestion by the user or acceptance of the suggestion by the user, the system will learn for the future, which prompt suggestions are preferred over others. The information on a prompt suggestion made by the system and the user reaction can be stored in the prompt database. This information can be continuously updated each time a potential prompt modification is provided to a user. Such evaluation can be made for individual prompts but also for prompt sequences. The quality of a prompt may become clear only after a couple of prompts. This effect can be accounted for by considering a sequence of prompts

According to one possible implementation, at least the evaluation and provision of information for providing potential prompt modifications is performed on an edge device. Performing these aspects on the edge device has the advantage, that an immediate response on user input can be performed without connection to an externally operating data processing system.

According to a preferred embodiment, the evaluation step includes determination of a confidence score, which is used to identify input prompts lacking sufficient detail, wherein the confidence score is determined by a relevance assessment technique. Advantageously, the relevance assessment techniques use embeddings as generated by a pre-trained transformer-based model to compare the input prompts with reference prompts for measuring cosine similarity between the embeddings of the input prompts and the embeddings of high-quality reference prompts. The high-quality reference prompts may be stored in the prompt database. To identify high-quality reference prompts, these prompts can be distinguishable marked in the database. The relevance assessment provides a measure, which can then be compared to a threshold in order to decide whether the system needs to assist the user or whether the prompt is already sufficiently precise and complete enabling generation of satisfying output. In case that the measure exceeds the threshold it is determined that no further prompt modification is necessary and the system can directly proceed with generating the output based on the user input for the generative AI system. It is to be noted that user input may also refer to an input created after one or more improvement cycles even in cases where the user simply accepts a proposal made by the system.

According to a further preferred embodiment, background information may be loaded from a contextual database or external information sources for evaluating the user input. External information sources may be the Internet, company data file systems, other AI gents. Loading contextual information for the step of evaluating the user input improves the evaluation result and thus leads to an improved potential prompt suggestion or improved information, which can be considered by the user to create new user input prompts. Contrary to known systems in which contextual information is only used for retrieval augmented generation of output, the new method may load contextual information, for example from a respective contextual database, in order to improve the evaluation of the input prompt. The contextual database may be realized as a graph database. Using a graph database is advantageous to accomplish complex non-linear thinking. The graph database is a database that uses graph structures for semantic queries with nodes. The contextual database may include a hierarchical embedding structure for efficient information retrieval and may support multi-modal data integration, dynamically updated based on user interactions, feedback, and domain-specific refinements.

Prompt suggestions may include prompt continuations, entirely new prompts but in particular also prompt sequence suggestions. These prompt sequence suggestions are obtained by re-ordering prompts of an initial prompt sequence, deleting prompts from a sequence of prompts or inserting or adding a new prompt in a previous sequence of prompts. A prompt sequence suggestion may also be a roll back, which is a step back to an earlier point in a sequence of prompts. This position in the past of a sequence of prompts is then a new starting point for the generative AI system. A roll back may also be initiated by the prompt generating agent identifying a position in the previous prompt sequence. The prompt sequence suggestion is determined based on feedback provided by a user and/or performance metrics. The performance metrics may for example analyze how often the user had to rework the prompt. The feedback may be provided by the user to which the generated output is provided. Alternatively, a dedicated agent, for example in form of as separate AI system, may be used to analyze the outcome of the generative AI system generated output and provide feedback on the output. The feedback may be for example a quality measure either directly input by the user, for example a value on a scale from 1 to 10, or the respective value provided by the agent. Another way to assess the output quality is to look at the confidence score of the output stages of the generative AI system that generates the output, showing what the confidence is for the selected output versus other alternative outputs generated. The prompt sequence suggestion may also include further suggestions to adapt an individual prompt. Thus, the prompt suggestion may be based on the previously used prompts reordered as a new sequence and also revising at least one of these prompts by providing for example a prompt continuation.

The determination of the prompt sequence for the prompt sequence suggestion may use a machine learning technique including reward-based algorithms that adjust the prompting sequences based at least on user satisfaction or performance outcomes. Reinforcement learning techniques, such as Q-learning or policy gradients, may be used to refine prompt sequences, with reward signals derived from user satisfaction scores and task completion rates.

In case that the communication of the user and the human expert or agent is established by the system, the human expert (agent) can provide additional contextual input to update the contextual database. Thus, in a situation where the system by itself is no longer in a position to improve the prompts or to provide reasonable information so that the user himself can improve the prompts, expert knowledge is not only used in order to generate a promising prompt that can be used for output generation but also to improve the content held in the contextual database. In case that an agent is involved in the communication with the user, the additional contextual input to update the contextual database may be obtained from various data sources including for example the Internet. Since information from the contextual database can be used in the evaluation, this will automatically improve future evaluations of prompts and, thus, information provided to the user in response to an input prompt and also future prompt suggestions provided by the system.

Advantageously, the system provides an automated selection of a suitable expert from a plurality of experts. The plurality of experts may be registered in a database and, once the system decides to establish a connection to an expert, a suitable expert is selected from this database. The selection may be performed based on the analysis of the user input and/or information on a specific domain associated with the respective human expert or agent.

According to an advantageous embodiment, the effectiveness of user interventions can be analyzed and, based on the result of this analysis, the criteria for when to involve human experts can be adapted.

In addition to the evaluation performed on the input side, namely based on the input prompt, the inventive method may also provide an analysis of the generated output generated by the generative AI system in response to a prompt for which it is determined, that no further modification seems to be possible. After an output is generated by the generative AI system in response to a prompt or a prompt sequence, perplexity analysis may be performed by the generative AI system and, based on the perplexity analysis result, quality information on the generated and provided output based on the underlying prompt or prompt sequence, or further potential prompt modification is provided. Alternatively, the perplexity analysis can be performed by dedicated separate AI system, which is specialized in analyzing generated output of AI systems. Such separate AI system is independent from the AI system used to create the output. It is to be noted that perplexity analysis is mentioned in this disclosure only to provide an example of evaluation of the output quality of the generative AI system. Alternatively, multi-stage verification, and relevance assessments can be used. This list is not exhaustive and other methods might be used. The results are used to generate recommendations for prompt refinement and could be stored in a feedback repository for iterative improvements. The result of the analysis on the output side might lead to rollback and the system performing trial and error learning to determine the best input prompt sequence. The output analysis may also be used to provide feedback for reinforcement learning. Here, the system produces output based on a plurality of different prompts and/or prompt sequences. The produced output is then evaluated and respective feedback on the quality of the generated output is then provided to enable reinforcement learning of the system to improve generation or selection of prompts, or prompt sequences.

Advantageously, a relevance assessment score and feedback provided by the perplexity analysis is output to the user, e.g., using an interactive visual dashboard. Having knowledge of these assessment scores allows the user to learn from previous attempts to generate more promising prompts in the future.

The method and system for executing the inventive method will now be explained with reference to the attached drawings in which
- Fig. 1: shows a flowchart illustrating the main method steps, and
- Fig. 2: provides an overview over the system layout used for executing the inventive method.

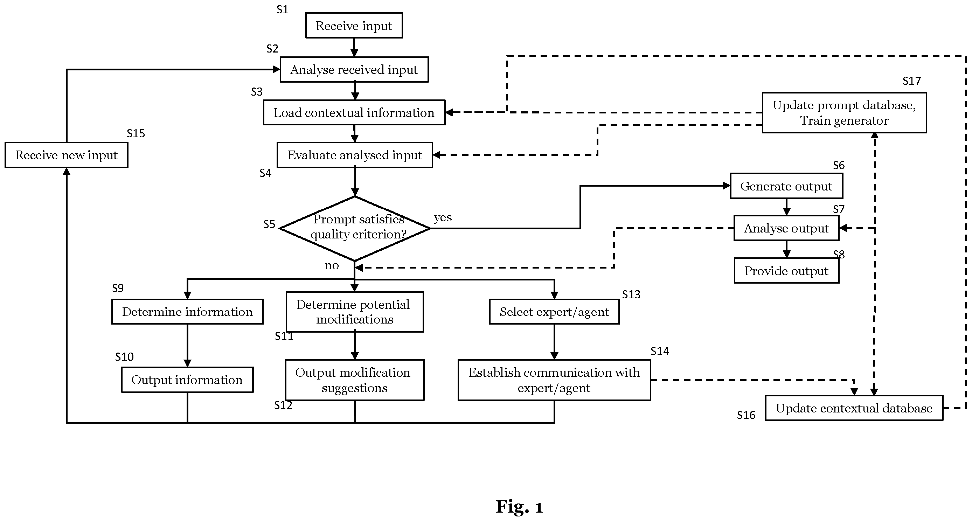

Fig. 1 gives an overview over the method steps that are executed in order to assist a user in generating a reasonable prompt or a prompt sequence based on which a generative AI system can generate content presumably satisfying the expectations of the user. First, in step S 1 the user inputs at least one prompt by inputting information into the system. The user input information may include information provided in any form and may typically include text input by a user (including speech input), multimedia input, one or more documents, one or more links to websites, or a combination thereof. The input may also comprise or consist of data and/or information receive through one or more APIs. The input information constitutes a prompt, probably together with additionally retrieved information. Such additional information may be retrieved from the internet or other data sources. Retrieving additional information can be performed based on an analysis of the initially provided information. In the following description, a prompt may always include information retrieved based on the initially input provided by the user.

In the next step S2, the input information received from the user including additionally received information is analyzed. In case that the input provided by the user is text input, the text will be parsed in order to derive the information included in the input text. In case that the input received from the user includes multimedia content like for example images or videos, the analysis may include identification of objects included in the images or videos and the relations of the objects that can be identified in the images with respect to each other. Analyzing such inputs for further processing of the input information in large language models is state-of-the-art and the analysis of the received input itself may therefore use commonly known techniques. A more detailed explanation of the analysis step S2 is therefore omitted for the sake of conciseness.

The analyzed prompt is then evaluated in step S4. In order to improve the evaluation result, contextual information may be obtained in step S3 after the received input is analyzed in step S2. Such contextual information may be loaded from a contextual database in step S3 and the context is determined from the analysis of the input form the user and related information input by the user or read in via a respective interface (API). All information is received via an input interface.

The evaluation in step S4 is performed by generating a confidence value which is a measure quantifying the probability that the analyzed prompt is sufficient for providing relevant and satisfying output when supplied to a generative AI system. This confidence value can be compared to a threshold in step S5, and in case that the confidence value is above the threshold, it is assumed that prompt generated by the user will lead to satisfying results when input into an AI system. The evaluation in step S4 may be performed by a dedicated AI system which is specialized in analyzing input prompts. This dedicated AI system may operate on a prompt database in which information on prompts is held. This information may include a plurality of different prompts, quality information of the respective prompt but also information on prompt semantics and contextual information. Based thereon, the AI system or a respectively trained model, can determine whether the input prompt will lead to satisfying results when supplied to the generative AI system. As it will be described later on, the prompt database can be continuously updated thereby taking into consideration the latest results achieved by supplying a prompt to the generated AI system.

Coming back to the situation in which the confidence value (or quality measure) exceeds a threshold as mentioned above, the input received from the user is provided to the generative AI system which, in step S6 generates an output based on the received input prompt. Typically, after generating the output in step S6, an analysis of the generated output is performed in step S7. The analysis of the output in step S7 may be twofold: on the one hand, a perplexity analysis may be performed using the generative AI system, which, in step S6, generated the output. Instead of or in addition to the perplexity analysis mentioned above, other evaluation metrics can be performed by the generative AI system. For example a dedicated output head for relevance could be included on the generative AI system S6. On the other hand, the analysis performed in step S7 may additionally or alternatively be performed by a dedicated agent. Such dedicated agent is a separate AI system, which may be trained for analyzing AI generated output with respect to certain aspects that can be defined in this dedicated AI system building the agent. In case that the perplexity analysis shows that the quality of the generated output exceeds a threshold, the generated output is provided as output in step S8. It is to be noted that in case that an analysis is performed using a dedicated separate agent, such analysis may also be performed on the output, which means after the output step S8.

The result of the analysis provides a correlation between the prompt underlying the generation of output in step S6 and the quality of the output, which is determined in step S7. Information on the underlying prompts received by the generative AI system to generate the output in step S6 and the result of the analysis performed on the output is used to update the prompt database or, in case that prompt suggestions are generated by a prompt generator, to train the prompt generator in step S 17.

The result of the analysis may also be used in order to update the contextual database S 16 from which contextual information may be loaded in step S3 as explained above.

In case that the evaluation of the analyzed prompt in step S4 achieves a result which, in the comparison step S5, does not exceed the threshold, it is concluded that the prompt(s) input by the user in step S1 are not sufficient to be provided to the generative AI system in expectation of receiving a satisfying result. "Sufficient" in the context of prompt evaluation means that the prompt satisfies requirements regarding at least one of specificity, completeness, and contextual relevance. These requirements may be set in advance when the system is designed. These requirements may be stored in the prompt database.

In order to improve the prompts before such prompts are forwarded to the generated AI system for generating output in step S6, the inventive method may choose one or a plurality of the following options:
In case that the evaluation of the analyzed received input reveals that the information provided by the input is weak or incomplete (low prompt quality), the system may decide to provide information on the received input or derived from the received input possibly enabling the user to improve the prompt quality. This is achieved by determining information in step S9, which is considered to be required in a prompt or at least advantageous based on the evaluation of the analyzed received input. To determine this information the contextual database, prompt database or prompt generator, and the previous outputs of the LLM may be considered. For example, the evaluation shows that a certain input text is ambiguous and may be used in at least two different fields of interest (for example, different technological areas). The determined information in that case could be that the information initially read in lacks a definition of the field of interest. Based on this determined information the system may then output information in step S10, which could be an invitation to the user to define or refine the field of interest. It is to be noted that the field of interest is mentioned as one example and the information provided may concern any other information type as well.

According to another example, the method may invite the user to provide information, which is not text based. For example, the initially input prompt is about creating a picture by the generative AI system, defining a specific object to be included in the picture. The analysis may then determine that the user's intent is to create a very specific representation in the picture, because a specifically defined object shall be in included. The method may then provide information derived from the read in prompt, namely that an example of an illustration of the desired object would be advantageous. Based on such information, the user could then upload an image of the object denoted in the original prompt already.

The output information could also include suggestions on the potential field of interest or a simple hint informing on the determined ambiguity. Any information that can be derived from the evaluation of the received input can be output to the user, for example in form of a text displayed on a HMI (human machine interface) of the user's edge device. It is then up to the user to improve his input information and, thus, the prompt taking into consideration the received information. In case the user decides to improve the input, new input is received in step S15. In case that such new input is received by the system, the method steps explained above starting from the analysis of the received input in step S2 are repeated.

It is to be noted that the above procedure describes a single iteration. In case that the analysis of the received new input is still not sufficient, a further iteration may be required.

In addition or alternatively to providing information on the evaluation result, in particular deficiencies of the received input, the system can also directly provide suggestions for improving the prompts input and evaluated in step S4. The prompt suggestions are potential prompt modifications. It is to be noted that for determining potential modifications in step S11 and also in the preceding step of analyzing received input for evaluating analyzed input, it is irrelevant if the received input is generated and input by the user which is obvious for the first prompt input in step S1, or if this input is new input received in step S15 made by a user after receiving information from the system.

In step S11, the system may determine potential prompt modifications. These potential prompt modifications may include at least one of prompt continuation or prompt suggestion. A prompt continuation may be determined by accessing a database, which allows to fit the input received to prompts that are stored in the database. In case that such fitting shows that the input received is incomplete, a prompt continuation for completing the prompt may be suggested. This is called prompt continuation. The prompt continuation can be implemented to be performed automatically, or manually which means that the user must accept the suggested prompt continuation before a new prompt is generated and evaluated in a further iteration of the system.

Additionally or alternatively, the system may determine a potential modification by identifying a completely new prompt from the database based on the analysis and evaluation of the received input constituting the initial prompt. Thus, the initial prompt is analyzed in order to determine the intent of the user. Based thereon, probably in combination with information loaded from the contextual database, a potential prompt modification is determined and provided to the user, for example, a new prompt is suggested as potential prompt modification. According to the described method, the new prompt could be exactly as stored in the prompt database or a generated prompt based on multiple information fields in the database. A prompt modification may also concern a prompt element which is only a portion of a prompt. For simplicity of the disclosure of the invention, explanations will be made mentioning "prompt" only. However, this does not limit the present invention and "prompt" is always meant to mean an entire prompt, or a prompt element, or a sequence of prompts.

The potential prompt modifications are suggested in an output step S12. Based on the suggested potential modifications, the user may then decide whether he/she takes over the suggestion or creates a new prompt by himself/herself in consideration of the proposed potential prompt improvement. In either case, new input will be received in step S15 and the next iteration of the above-mentioned steps starts.

Finally, as a third possibility to assist the user when the (re-)evaluation of the input reveals that the quality of the prompt is not sufficient, the system can establish a communication to an expert or agent to open a discussion with the user in order to provide information or assistance revising the input information in step S 15. The expert may be a human expert selected in step S13 from a database in which a plurality of human experts are registered. The registration includes information on preferred topics where assistance by the human expert may be specifically advantageous. On the other hand, the database may store a plurality of agents each specifically trained for responding in certain technological area. For selecting the best available expert, a matching algorithm refers to a predefined computational process for selecting the most suitable human expert or agent based on specific criteria, such as domain expertise, past interactions, or contextual relevance of the prompt. This ensures the right expert is connected to the user.

Again, the user may take into consideration the information received from the agent/human expert and create new inputs received by the system in step S15 before another iteration starts based on the new prompt received in step S15.

The information provided by the human expert or the agent can also be used to update the contextual database in step S16. For example, in case that the system, before establishing communication with the human expert/agent, could not find relevant information in the contextual database, the assistance provided by the human expert or the agent which has access to specialized databases for retrieving information may lie in providing contextual information which is suitable for enhancing the original input information to make it clearer and thus sufficient to produce relevant output in the generative AI system. Accordingly, such new contextual information which is provided by the agent or the human expert can be added to the database thereby updating the contextual database in step S16. The contextual database could be made available to the generative AI system as well, leading to potentially better output.

The above provided detailed information regards assisting generation of prompts by determining and outputting information, determining potential modifications and outputting modification suggestions and, in case that this does not seem to be promising, establishing communication with an agent/human providing additional assistance. These examples focused on an analysis of an input received from the user or a prompt generating AI system. However, even in case that the initial evaluation indicates that the prompt may provide sufficient results when forwarded to a generative AI system, the output produced by the generative AI system may be disappointing. Since an analysis of the output generated by the generative AI system in step S6 allows to determine the quality of the generated output, the achieved quality may also be compared to a threshold and, if the quality falls below the threshold the system may go back to providing assistance for modifying the prompt or prompt sequence in order to improve the results. In Fig. 1, this is indicated by the dashed line connecting the analysis step S7 with the three ways of assisting prompt amendment in order to improve prompt quality.

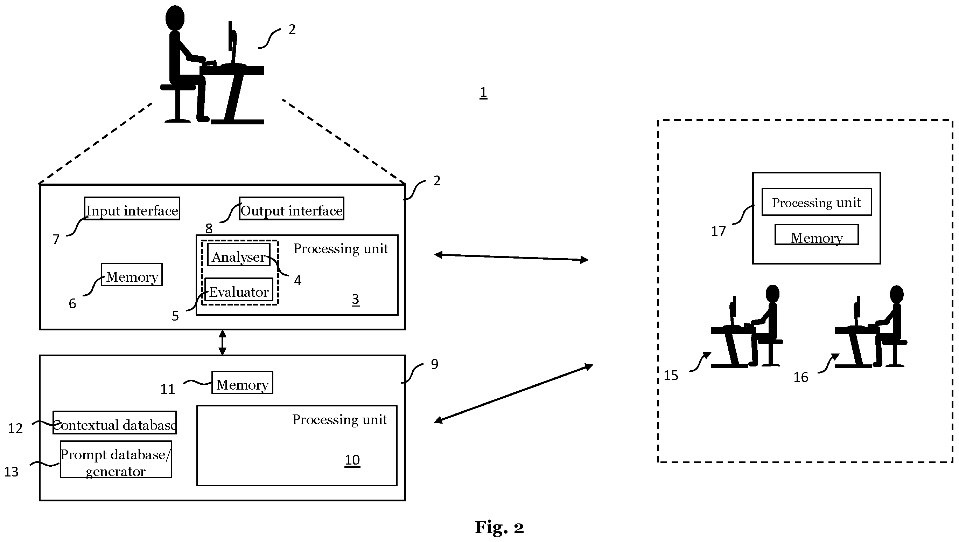

Fig. 2 shows a diagram illustrating the major components of a system 1 executing the method described in greater detail with reference to the flowchart of Fig. 1. A user who wants to generate output using an AI system based on prompts that are input by the user uses an edge device 2 in order to input information as prompts for being processed in the generative AI system. Before these prompts are forwarded to the generative AI system, the respective input received from the user and also additional information retrieved based on the information received from the user is processed by a processing unit 3. The processing unit 3 comprises an analyzer module 4 and an evaluator module 5. It is to be noted that the analyzer module 4 and the evaluator module 5 may be realized by software modules, which are executed by the processing unit 3. The analyzer module 4 performs the analysis of the input prompt information and the evaluator module 5 evaluates the result of the analysis as explained in greater detail with reference to Fig. 1. Alternatively, the analyzer module and the evaluator module 5 may be functionalities provided by a neuronal network. Such neuronal network may even include the determination and provision of information to assist prompt generation, determination and suggestion of prompt modifications and selection of an expert/agent and establishment of respective communication,

The processing unit 3 may be a single processor or a plurality of processors. For realizing the present invention, the specific structure of the processing unit 3 is not relevant as long as the respective software modules can be executed in order to realize the analyzer module 4 and the evaluator module 5. The software that is executed by the processing unit 3 can be stored in a memory 6 which is connected with the processing unit 3.

Further, the edge device 2 comprises an input interface 7 and an output interface 8. The input interface 7 can be a keyboard, a microphone, a touchscreen, an API (application programming interface), for example, or a combination thereof. The output interface 8 will usually be any kind of display for visualizing information in order to provide the information to the user. Alternatively or in addition, the output interface can provide sound output. The output interface may also consist or include one or more APIs.

Examples for an edge device 2 are a smart phone, a tablet computer, a laptop, a personal computer.

The user uses the input interface 7 in order to input information in order to create a prompt based on which the generative AI system shall generate output. Before the prompt is provided to the generative AI system 9, the input information received from the user is analyzed by the analyzer module 4. As explained with respect to Fig. 1, such analysis may comprise parsing of text information and analyzing visual information by a respectively trained language model. After analyzing the input, the result is provided to the evaluator module 5. The evaluator module 5 performs the evaluation as described with reference to Fig. 1. The contextual database may be provided by the memory 6. Alternatively, as illustrated in Fig. 2, a dedicated contextual database 12 is provided in the generative AI system 9. In such a case, the contextual database 12 must be accessible for the processing unit 3 of the edge device 2. A respective connection allowing data exchange between the generative AI system 9 and the edge device 2 must then be established.

In addition to the contextual database 12, the AI system 9 comprises a memory 11 storing the model used in the processing unit 10 for generating output based on prompt input received from the edge device 2.

In addition to the context database 12, the AI system may also comprise a prompt database or a prompt generator 13 used for generating or retrieving potential prompt modification suggestions to the user using the output interface 8 on the edge device 2. Again, prompt database 13 must be accessible for the edge device 2, because the determination of potential modifications is advantageously performed on the edge device 2. The same is true for the determination of information and output of information based on the result of the evaluation performed by the evaluator module 5. The prompt database 13 may either be a common database 13 or a collection of individual databases 13 storing personalized information for each user or groups of users. While the illustrated embodiment show separate contextual and prompt databases 12 and 13, it is also possible to have a single, combined database instead. Alternatively, the processes explained to run on the edge device may also be executed on a system centrally, which might be advantageous with respect to power consumption of the edge device.

Using the model stored in a memory 11 of the generative AI system 9, the processing unit 10 generates output based on supplied prompts after prompt generation and/or refinement according to the procedure illustrated in Fig. 1 is completed and the resulting prompts are forwarded to the AI system 9. The processing unit 10 shall be understood as representing a commonly known AI system together with the memory 11. Details thereof will not be explained for sake of conciseness. The output generated in response to the supplied prompt(s) by the generative AI system 9 is then supplied to the edge device 2 to be output by the output interface 8.

As described with reference to Fig. 1, the system 1 comprises a step of establishing communication with one or more human experts and/or agents. Such human experts are shown in Fig. 2 on the right side and denoted with reference numerals 15 and 16. A single exemplary agent is shown as a simplified structure comprising a processing unit and a memory, which are commonly denoted with reference numeral 17. As explained above, such an agent 17 may be a dedicated AI system. The arrow between the edge device 2 and the generative AI system 9 represent the communication that is established between the AI system 9 and the edge device 2. While the upper arrow directly refers to the communication which is established between the user via the edge device 2 and the human experts 15 or 16, or the agent 17, the communication that is established between the generative AI system 9 and the human experts 15, 16 or the agent 17 is required in order to update the context database 12 and/or the prompt database 13 or train the prompt generator 13. On the other hand, context information may also be provided from the AI system to the expert 15, 16 or the agent 17 plus the generated output of the AI system in order to provide the experts/agents with as much information as possible to enable high quality assistance.

## Claims

1. A computer-implemented method for assisting prompt generation for a generative AI system, comprising:
∘ Reading in at least one prompt from an input interface;
∘ Analyzing the at least one prompt and evaluating the at least one prompt based on at least one of specificity, completeness, likelihood of the AI system to produce high quality output and contextual relevance; and based on the evaluation result execute at least one of the following:
- determine and provide information on the evaluation result to the user on the likelihood of achieving high-quality output
- determine and provide potential prompt modifications and
- establish communication between a prompt generating agent and an assisting agent for enabling the assisting agent to communicate with the prompt generating agent.

2. Computer implemented method according to claim 1, wherein the prompt includes multimodal input directly or indirectly input by the prompt generating agent.

3. Computer implemented method according to claim 2 wherein, in case that the input comprises textual input, the evaluation is performed by a neural network model trained to identify idiomatic expressions and domain-specific language within the input text.

4. Computer implemented method according to any of the preceding claims, wherein a potential prompt modification is determined and provided to the user, wherein the determination of the potential prompt modification is based on at least one of a search in a prompt database and an output from a prompt generator.

5. Computer implemented method according to claim 4, wherein the prompt database is continuously updated and the updated prompt database is used for future search for potential prompt modifications in the prompt database.

6. Computer implemented method according to any of the preceding claims, wherein updating the model and algorithm used in the evaluation is based on user response to provided information.

7. Computer implemented method according to any of the preceding claims, wherein potential prompt modifications include at least one of prompt continuation and prompt sequence adjustment.

8. Computer implemented method according to claim 7, wherein in case of a prompt sequence adjustment, the systems the adjusted prompt sequence is applied to a prior state of the output generation of the generative AI system.

9. Computer implemented method according to claim 7 or 8, wherein potential prompt modifications refine user generated prompts based on the model's understanding of the user's intent and context.

10. Computer implemented method according to any of the preceding claims, wherein the evaluation and provision of information and/or potential prompt modifications is performed on an edge device receiving the input from the prompt generating agent.

11. Computer implemented method according to any of the preceding claims, wherein in the evaluation a confidence score is determined to identify input prompts lacking sufficient detail, wherein the confidence score is determined by a relevance assessment technique.

12. Computer implemented method according to claim 11, wherein the relevance assessment techniques use embeddings generated by a pre-trained transformer-based model to compare the input prompts with reference prompts or measuring the cosine similarity between the embeddings of the input prompts and the embeddings of high-quality reference prompts.

13. Computer implemented method according to any of the preceding claims, wherein background information is loaded from a contextual database or external information sources for the evaluation of the prompt and/or to determine a potential prompt modification.

14. Computer implemented method according to claim 13, wherein the contextual database is organized as a graph database.

15. Computer implemented method according to claim 13 or 14, wherein the contextual database is continuously updated based on at least one of the output generated by the AI system, input for prompt generation, potential prompt modification, and evaluation of the analyzed input.

16. Computer implemented method according to any of the preceding claims, wherein the potential prompt modification includes a prompt sequence suggestion obtained by reordering prompts of a previously input prompt sequence, or omitting prompts in a previously input prompt sequence, or adding at least one prompt to a previously input prompt sequence based on feedback and performance metrics.

17. Computer implemented method according to claim 16, wherein the determination of the prompt sequence for the prompt sequence suggestion uses a machine learning technique including reward-based algorithms that adjust the prompting sequences based at least on user satisfaction or performance outcomes.

18. Computer implemented method according to any of the preceding claims, wherein, when a communication of the user and the human expert and/or other agent is established, additional contextual input provided by the human expert and/or other agent is used to update the contextual database.

19. Computer implemented method according to any of the preceding claims, wherein, when a communication of the user and the human expert and/or other agent is established, the human expert and/or other agent is selected from a database storing information on a plurality of human experts and/or other agents based on the specific domain or context of the user query.

20. Computer implemented method according to any of the preceding claims, when a communication of the user and the human expert and/or other agent is established, analyzing the effectiveness of interventions and, based thereon adapting the criteria for when to involve human experts and/or other agents.

21. Computer implemented method according to any of the preceding claims, wherein, after an output is generated by the generative AI system in response to an input prompt or prompt sequence provided to the AI system, an analysis is performed on the generated output and, based on the analysis result, information on the underlying prompt or prompt sequence, or further potential prompt improvement is provided and preferably stored for future potential prompt modification determination.

22. Computer implemented method according to claim 21, wherein relevance assessment scores and feedback provided by the analysis is output to the user.
